# EUROPEAN PATENT SPECIFICATION

(11) **EP 4 502 644 B1**
(45) Date of publication and mention of the grant of the patent: **04.02.2026**
(21) Application number: 23188913.0
(22) Date of filing: 01.08.2023
(51) Int. Cl.: G01S 7/03, G01S 7/28, G01S 13/26, G01S 13/88, H01Q 21/06, H01Q 21/08, G01S 13/02

(54) **RADAR FRONT-END FOR HIGH RESOLUTION RADAR**
RADAR-FRONTEND FÜR HOCHAUFLÖSENDES RADAR
FRONTAL RADAR POUR RADAR HAUTE RÉSOLUTION

(43) Date of publication of application: 05.02.2025
(73) Proprietor: NXP B.V., 5656 AG Eindhoven (NL)
(72) Inventor: Alhasson, Saif, 5656AG Eindhoven (NL)
(74) Representative: Hardingham, Christopher Mark

(56) References cited:
- JP-A- S5 741 006
- JP-A- S58 103 206

## Description

### Field

The present disclosure relates to radar front-ends. In particular it relates to radar front-ends having a plurality of receive antennas, in which the components are passive.

### Background

To achieve high resolution, conventional radars include a plurality of receive antennas which are spaced apart. A transmitted radar pulse, which typically may be configured as a "chirp" in which the carrier frequency is varied, is transmitted from a transmit antenna, reflections from a target are received as respective reflected pulses at each of the plurality of receive antenna. The time of arrival at the separate receive antenna typically varies, depending on the angle of arrival of the reflected pulses. Using well known, but computationally intensive methods, the reflected signal received at each of the antennas can be processed to determine an accurate angle of arrival. Deconvolving the contribution of the separate receive antennas may require intensive computation, and this typically limits the fields of application in which such high-resolution radar are utilised. It would be desirable to provide an alternative front-end which may reduce the costs, and thereby increase the number of fields of application for which high-resolution radar may profitably be used, for example for gesture recognition.

Japanese patent application, publication number JP S58 103 206A, discloses a frequency scanning array antenna device having a monopulse angle measuring function, having radiators, radiator couplers and delay lines for providing a phase difference between signals of two antenna circuits, to provide frequency scanning.

### Summary

The invention is defined in apparatus claim 1 and in corresponding method claim 13. The delay lines defined in claims 1 and 13 provide a temporal separation between received reflected radar signals from each receive antenna. This may greatly simplify signal processing at relatively low cost.

In one or more embodiments, the radar front-end is configured to couple a respective reflected radar pulse received at each antenna of the array of receive antennas sequentially to the receiver unit. The sequencing will depend on the configuration arrangement of the delay lines and couplers.

In one or more embodiments, the antennas are configured to receive a radar signal having a carrier frequency in a range of 10 GHz to 100GHz. These radar frequencies are particularly suited to short range radar applications such as gesture recognition. They are also suited to relatively low cost manufacturing processes such as strip line waveguides

Each of the receive antennas receives a reflected radar pulse wherein the reflected radar pulses overlap in time, and wherein the delay lines delay the reflected radar pulses such that at the output of the first directional coupler they do not overlap in time. Providing a non-overlap significantly simplifies subsequent processing in a receiver unit.

In one or more embodiments, the reflected radar pulse has a duration in a range between 10 µs and 1ms. In particular the transmitted and thus the reflected radar pulse should have a duration allowing it to include relevant appropriate features such as a frequency chirp. In one or more embodiments, each delay line introduces a delay between 10µs and 1 ms. Providing a delay which is at least equal to the duration of the transmitted radar signal facilitates temporal separation including non-overlap of the received reflected radar signals.

In one or more embodiments, the array of receive antennas is a linear array. In other embodiments the array of receive antennas is a two-dimensional array. The array may be a regular array or an irregular array.

In one or more embodiments the plurality of directional couplers is a plurality of rat-race couplers. In, other forms of directional couplers may be used instead of rat-race couplers. In one or more embodiments the first input of each directional coupler is a respective rat-race first input, the second input of each directional coupler is a respective rat-race second input, and the output of each directional coupler is a respective rat-race sigma output.

In one or more embodiments the antennas of the array are equally spaced apart, and the delay lines are configured to provide equal propagation delays.

In one or more embodiments, the radar front-end further comprises a transmit antenna, wherein the transmit antenna is aligned to the linear array of antennas to form an extended array. Including a transmitter antenna in the front-end, and in particular in the radar array of antennas, may simplify and/or reduce the costs of manufacturing.

In one or more embodiments, the transmit antenna is configured to transmit a radar chirp, each antenna of the array of receive antennas is arranged to receive a respective reflection of the chirp from a target, and the delays lines are configured to couple the reflections to the receiver unit such that they are non-overlapping in time.

In one or more embodiments, the radar front-end may further comprise at least one of the receiving unit and a transmitter unit.

These and other aspects of the invention will be apparent from, and elucidated with reference to, the embodiments described hereinafter.

### Brief description of Drawings

Embodiments will be described, by way of example only, with reference to the drawings, in which
FIG. 1 shows a simplified schematic of a conventional radar system comprising a front-end having a single transmit antenna and an array of receive antennas;
FIG. 2 illustrates, schematically, timings associated with operation of a conventional radar having a multiple receive antennas such as that shown in FIG. 1;
FIG. 3 shows radar system comprises a front-end having therein a transmitter antenna 120 and an array of receive antennas according to embodiments of the invention;
FIG. 4 illustrates, schematically, timings associated with operation of a radar having a multiple receive antennas such as that shown in FIG. 3;
FIG. 5 shows a radar front-end according to one or more embodiments of the invention;
FIG. 6 shows a radar front-end according to one or more other embodiments of the invention;
FIG. 7, FIG. 8 and FIG. 9 each show a radar front-end according to yet other embodiments of the invention; and
FIG. 10 and FIG. 11 show a radar front-end arraned for gesture recognition, which are to be considered merely as examples not being part of the invention as claimed. It should be noted that the FIG.s are diagrammatic and not drawn to scale. Relative dimensions and proportions of parts of these FIG.s have been shown exaggerated or reduced in size, for the sake of clarity and convenience in the drawings. The same reference signs are generally used to refer to corresponding or similar features in modified and different embodiments

### Detailed description of embodiments

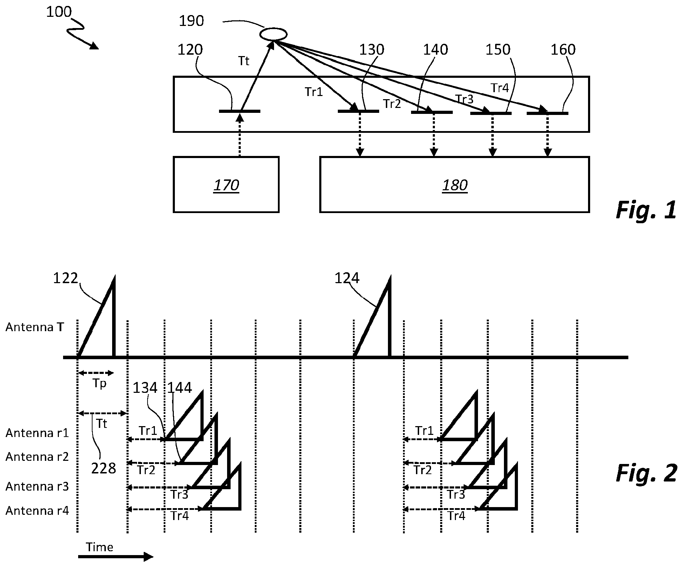

FIG. 1 shows a simplified schematic of a conventional radar system 100 comprising a frontend 110 having a single transmit antenna 120 and an array of receive antennas 130, 140, 150, 160 which in this example are configured as a linear array. The radar system 100 further comprises a transmitter unit 170 which may be integral with, or as shown may be separate from, a receiver unit 180. In use, the transmitter unit 170 generates a radar pulse, which is transmitted from the transmit antenna 120. In the presence of a reflective target 190, the transmitted pulse results in a reflected radar pulse. The reflected radar pulse is received at each of the receive antennas. Each copy of the reflected radar pulse may be pre-processed, for example in an RF front-end processor (not shown) and forwarded to the receiver unit 180.

FIG. 2 illustrates, schematically, timings associated with operation of a conventional radar having a multiple receive antennas such as that shown in FIG. 1. The horizontal axis represents passage of time. The transmitter unit 170 generates pulses which are transmitted from the transmitter antenna 120, as shown schematically at 122 and 124. Each pulse 122 and 124 is shown schematically as a triangle, illustrating the concept of a frequency chirp, in which the frequency of the transmitted pulse is varied during the pulse - as shown the frequency may be linearly increased from the start to the finish of a pulse, although the skilled person will be aware that other types of chirp may be used. The pulsar chirp 122, 124 may have a duration Tp, as shown at 126. The transmitted signal takes a finite time Tt to reach a reflector or target, illustrated in FIG. 1 and FIG. 2 by 128 and 228 respectively.

When the pulse or chirp reaches the target 190, it is reflected back towards the radar system. The reflected signal takes a finite amount of time to reach each receive antenna. However, since the receive antennas are generally not equally distant from the target, the pulse or chirp takes a slightly different time Tr1, Tr2, Tr3, or Tr4 to reach each receive antenna. This is illustrated in FIG. 1 by the different lengths of the paths 132, 142, 152, and 162. As illustrated in FIG. 2, the nearest receiver, in this case receiver 130 receives the start of the reflected signal 134 slightly ahead of the next nearest receiver which in turn receives the start of the reflected signal 144 slightly ahead of the next receiver, and so on. In other words, the signal is not received simultaneously at each of the receive antennas, but there is an offset between each one. However, the path difference between the reflected signals is short, of the order of a few cm. For instance, 1 cm path difference corresponds to a time offset of 30 ps for a radar signal travelling at the speed of light (3x10*8 m/s). In general, the time offset resulting from the difference in path length is much smaller than the duration of the reflected radar pulse. The signals received at the receive antennas therefore largely overlap in time, and this generally requires parallel processing of the received signal within the receiver unit 180.

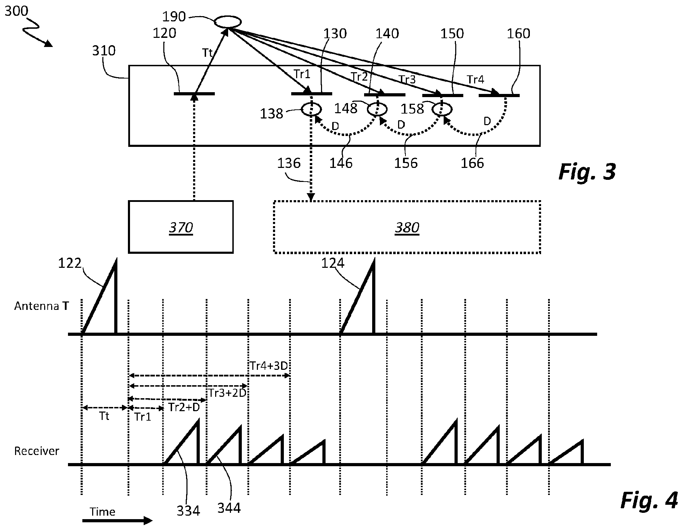

Turning now to FIG. 3 and FIG. 4, these illustrate a general concept according to embodiments of the invention. Turning first to FIG. 3, radar system 300 comprises a front-end 310 having therein a transmitter antenna 120 and an array of receive antennas 130, 140, 150 and 160. The radar system further comprises a transmitter unit 170 and a receiver unit 380. The first receive antenna 130 is coupled to the receiver unit receiver unit. However, the remaining receive antennas 140, 150, 160 are not directly connected to the receiver unit 380. Instead, the front-end includes an arrangement of delay lines and couplers, in a daisy-chain configuration. That is to say, the reflected data pulses received at all of the antennas are routed to the receiver unit 380 by the single signal path 136. The reflected data pulse received at the first receive antenna 130 is directed to this signal path 136 via a coupler 138. The signal path 136 is connected to an output of the coupler 138. The coupler has a first input from the first receive antenna 130, and a second input. The second input is connected to a delay line 146. The delay line 146 is connected to the second receive antenna 140 via a second coupler 148. The delay line 146 is connected to an output of the second coupler 148 The second coupler has a first input which is connected to the second receive antenna 140, and a second input which is connected to a further delay line 152. The further delay line 156 is connected to the third receive antenna 150 via a third coupler 158. The delay line 156 is connected to an output of the third coupler 158 The third coupler has a first input which is connected to the third receive antenna 140, and a second input which is connected to a yet further delay line 166. The yet further delay line is connected to the fourth receive antenna 160. In the embodiment shown, the fourth receive antenna 160 is the end receive antenna and the yet further delay line 166 is coupled directly to the fourth antenna. In other embodiments, a further coupler may be introduced between the yet further delay line 166 and the fourth receive antenna 160 in order that the signal attenuation between any receive antenna and an associated delay line is equal. In other embodiments, there may be more receive antennas such that a coupler is required to couple the signal from those receive antennas.

FIG. 4 shows the effect of introducing the couplers and delay lines into the frontend 310. Similar to conventional operation illustrated by FIG. 2, the transmitter unit 370 generates pulses which are transmitted from the transmitter antenna 120 and shown schematically at 122 and 124. The pulse or chirp 122, 124 may have a duration Tp, as shown at 126. The transmitted signal takes a finite time Tt to reach a reflector or target, illustrated in FIG. 1 and FIG. 2 by 128 and 228 respectively.

When the pulse or chirp reaches the target 190, it is reflected back towards the radar system, and the reflected signal takes a finite amount of time to reach each receive antenna. As discussed above, since the receive antennas are generally not equally distant from the target, the pulse or chirp takes a slightly different time Tr1, Tr2, Tr3, or Tr4 to reach each receive antenna. And thus the reflected signal is received with a slightly different starting time. However the duration of the signal is large relative to differences between the flight times - that is to say the differences between (Tt + Tr1), (Tt + Tr2), (Tt + Tr3) and so on. So the signals, as received, overlap in time. However, by introducing the delay lines, the signals can be spaced apart in time, as illustrated in the lower part of FIG. 4. Similar to conventional configuration, the start 334 of the reflected radar signal is received by the first receive antenna 130 at a time (Tt + Tr1) after the start of the transmission of the signal from the transmit antenna. The reflected signal is received by the second receiver antenna 140 at a time (Tt +Tr2) after the start of the transmission. However, this signal is routed to the signal path 136 via a delay line. If the delay line introduces a delay D, then the start of the reflected signal 344 received by the second received antenna 140 reaches the signal path 136 to the receive unit 380 at a time (Tt + Tr2 + D) after the start of the transmission. By ensuring that the delay D is equal to or larger than the duration of the transmitted signal pulse or chirp, when it reaches the signal path 136 to the receive unit the signal received by the second receive antenna 140 does no not overlap in time with the signal received by the first receive antenna 130 which has not been delayed. Similarly, the reflected radar signal received at the third receive antenna 150 is delayed by a further delay line introducing delay D before it reaches the path taken by the signal received at the second receive antenna 140. This signal has to travel through delay line 156 and delay line 146 before it reaches the signal path 136. The start of the signal reaches the signal path 136 at a time (Tt + Tr3 + 2D) after the start of the transmitted signal.

Stated another way, the signals received by the respective antennas have been spaced apart in time by using the delay lines. It will be appreciated that there is attenuation of the signal as it travels through the delay lines and in particular through the couplers. This is illustrated in FIG. 4 by depicting smaller triangles for the later received signals on the signal line, and it should be noted that this does not reflect, nor is it intended to suggest, a different frequency spectrum.

As has already been shown in FIG. 2, typically radar systems have a wait or response time between each transmitted chirp in order to receive the reflected signals. It will be appreciated, that in order for the principal described above to be most effectively used, the time should be sufficient such that the reflected radar signals received by all the receive antennas can be received by the receiver unit 380 in a sequential and nonoverlapping fashion as discussed above prior to the start of receiving signal from a subsequent transmitted pulse or chirp.

Processing of the signal in the receive unit is straightforward, using known techniques. In particular the radar front end, having a linear array of antennas daisychained with delay lines therebetween, is similar to a moving synthetic aperture radar (SAR) platform with a single moving receiver, which scans the target with snapshots at the exact places of the receiving antennas. The trajectory of the imitation of that movement can be traced by the feeding network, i.e. what is the next antenna to be fed. The target is illuminated by a chirp sent by the Tx antenna and received by each Rx antenna as if a single receiver antenna is moving on those positions and building a larger synthetic aperture to image the target with SAR functionality. That functionality is imitated by the radar frontend and well explained in the literature, and familiar to the skilled person.

From another perspective, the temporal separation of the reflected radar pulses received by each of the antenna allows signal processing to be carried out in the same way as other time division multiple access (TDMA) techniques, again which will be familiar to the skilled person.

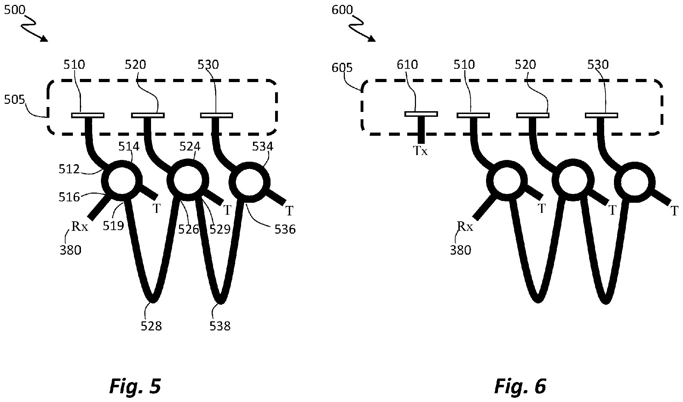

Turning now to FIG. 5, this shows a radar front-end 500 according to one or more embodiments of the invention. The radar front-end comprises an array 505 of antennas 510, 520, 530. Each antenna is coupled to first input 512, 522, 532 of a respective one of a plurality of directional couplers 514, 524, 534. The array of antennas includes an end antenna 510 coupled to a first input 512 of a first directional coupler 514, the first directional coupler 514 having an output 516 configured to be coupled to a receiver unit (380, not shown in FIG. 5). The remainder 524, 534 of the directional couplers each have an output 526, 536 coupled to an input, or start, of a respective delay line 528, 538. An output, or end, of each delay line is coupled to a second input 519, 529 of a respective neighbouring directional coupler. In the embodiment shown in FIG. 5, each directional coupler is implemented as a rat-race ring. As will be familiar to the skilled person, a rat-race ring has two inputs and two outputs. It can be configured as a directional coupler in which one of the outputs is terminated with a suitably matched termination (shown by "T" in the FIG.). Moreover, use of a directional coupler, such as the rat-race ring configured as shown limits or minimises any reflection back to the antenna, which could otherwise cause interference on the signal.

Turning now to FIG. 6, this shows a radar front-end 600 according to one or more other embodiments of the invention. The radar front-end comprises an array 605 of antennas 510, 520, 530. The array 605 may include, as shown a further, transmit antenna 610, which is directly coupled to a transmitter unit 170 (not shown).

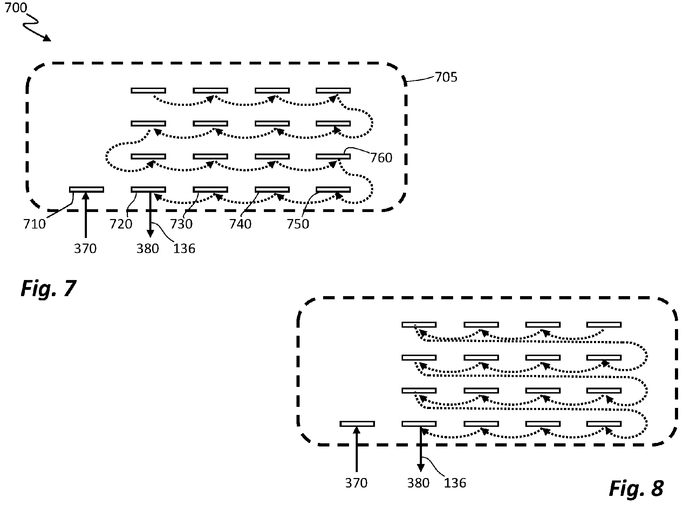

Turning to FIG. 7, this shows a radar front-end 700 according to one or more other embodiments of the invention. As shown, an array 705 of antennas are arranged as a two-dimensional array. One of the antennas may be configured as a transmit antenna 710 and configured to be connected to a transmitter unit 370. The remaining antennas are receiver antenna 720, 730, 760, 770.., with delay lines 732, 742.. 762, 772.. therebetween. As in previous embodiments, directional couplers connect the outputs, or ends, of the delay lines with the signal from each receive antenna, and, except in the case of the last antenna 720, receive the signal from an associated receive antenna at an input or start of the delay line. For ease of understanding, the directional couplers are not shown in the FIG.. As shown in FIG. 7, the antenna may be connected across a first row, and then back across another row. The composite signal, being the combination of the temporally separated reflected radar signals received at each of the antenna, is read out from the first antenna to the receiver unit 380 by on the signal path 136. The receiver unit 380 then "reads" the reflected signals from a first horizontal row left-to-right, then a second horizontal row from right-to-left, and a third horizontal row from left-to-right, as shown.

The horizontal separation of the antenna in each row enables signal processing, such as that for a SAR platform, which may allow improved resolution in a horizontal plane, compared to single antenna. Moreover the vertical separation of antenna enables signal processing, again such as that for a SAR platform, which may allow improved resolution in a vertical plane. It will be appreciated that the interleaved left-to-right and right-to-left readout from the antennas may require use of additional signal processing. Turning briefly to FIG.8, this shows an array of turners similar to that shown in FIG.7 except that in this instance the delay lines and directional couplers are configured to enable a "readout" from each row of antennas in a left-to-right order. This may allow for somewhat simplified signal processing in the receiver unit 380. It will be appreciated that, although the FIG.s 8 and 9 show "4x4" array of receive antennas, fewer or more antennas may be included in any row, and fewer or more rows may be included. Furthermore, the number of antennas in each row, need not be the same. Moreover, the spacing of the antennas in each row of the spacing between rows need not be the same. However, it will be equally appreciated that the signal processing is simplified in the case of a regular array of equally spaced antenna, where there are the same number of antenna in each row. Moreover, the signal processing is also relatively simplified in embodiments in which the rows of antenna are equally spaced in a vertical direction.

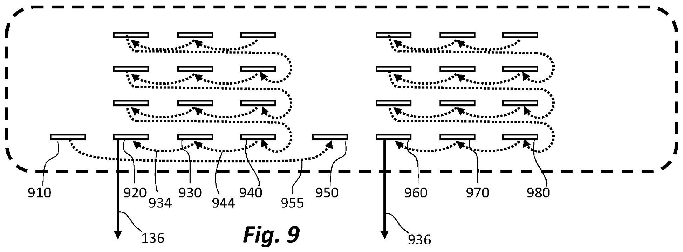

FIG. 9 illustrates a radar front end 900 according to other embodiments of the invention. FIG. 9 shows a first subarray, including a transmit antenna 910 and an array - in this case a two-dimensional array - of receive antenna. As in the previous described embodiments, the receive antenna 920, 930, 940... are connected by delay lines 934, 944... and directional couplers (not shown), such that reflected radar signals received at each antenna arrive at the signal path 136 sequentially and spaced apart. However, in this embodiment there includes one (or more) further such subarray, each having their own transmit antenna and receive antennas. In the example shown there is one such subarray having a further transmit antenna 950, and further receiver antennas 960, 970, 980.... Transmit antenna 950 is coupled to transmit antenna 910 by a further transmit delay line 955. To include multiple transmit antennas with delay lines therebetween, directional couplers are required as discussed above with regard to combining the reflected radar signals; however in the case of transmit antenna the directional couplers are provided so as to enable the pulse or chirp to be transmitted to be coupled first to the first transmit antenna 910, and then, after being delayed by a delay line, to be coupled to the second transmit antenna 950. In the case of further transmit antennas, further directional couplers and delay lines are included. In embodiments as such as that shown in FIG. 9, the delay lines on the transit side may include a delay which allows time division multiplexing of the transmit signal.

In some such, the first transmit receive antenna of the second subarray may be coupled to the last receive antenna, marked as 949 in FIG. 9 by yet another delay line. However the skilled person will appreciate that the signal from the more remote parts of the second subarray is already significantly attenuated, by passing through several directional couplers and delay lines, by the time it reaches the first antenna 960 of the second subarray. It may therefore be preferable to direct this signal directly to the receive unit in order not to further degrade the signal to noise ratio of the received signal. Thus some embodiments according to those shown in FIG. 9 may include a second signal path 936 from the second subarray, to the receiver unit in addition to the signal path 136. In embodiments in which there are more than two subarrays, there may, correspondingly, be more than two signal paths to the receive unit.

It will be appreciated that the radar front-ends described above including an array of receive antennas and associated delay lines and couplers may enable low-cost high-resolution radar since all the front-end components, excluding the transmitter and receiver, such as the couplers delay lines and antennas may be provided as passive components and may be straightforward to design and manufacture. Furthermore, it will be appreciated that a single RF channel may be used to provide high angular resolution, which may be beneficial compared with conventional multiple-input multiple-output (MIMO) radar in which more channels are added to improve resolution. Furthermore, the benefits of SAR architectures may be provided without the requirement for any moving parts. Such configurations may be particularly suitable for applications such as gesture recognition.

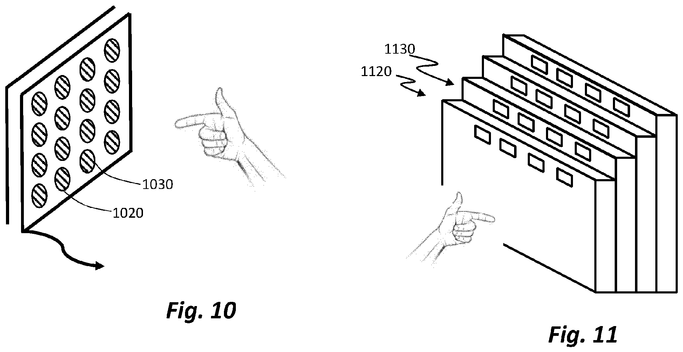

FIG. 10 shows, schematically, a radar front-end suitable for gesture recognition, which is to be considered merely as an example not being part of the invention as claimed. As shown, the radar front-end includes an array of antenna, in this case arranged as a two-dimensional array. The array may be configured in a vertical arrangement and may be able to detect gestures. As will be apparent from description hereinabove, such an array may enable a low-cost high-resolution radar which may be used in applications, such as gesture recognition, where conventional high-resolution radar techniques may not be economically justified.

As shown in FIG. 10, the antenna may be patch antenna 1020, 1030.... However, the present disclosure is not limited thereto, and other antenna types known to the skilled person may be used. In particular, the frequencies typically employed for short range radar for applications such as gesture recognition typically currently of the order of 10 GHz to 100 GHz. Such frequency ranges are well suited to slot antenna which may be constructed at low cost for example by multilayer PCB fabrication processes, to result in a radar array such as that shown in FIG. 11, in which the separate rows of antenna 1120, 1130... are fabricated within separate PCB or similar structures, in which waveguides can be readily printed or otherwise defined.

## Claims

1. A radar front-end (500) comprising:
an array of receive antennas (510, 520 ,530), each antenna being coupled to a first input of a respective one of a plurality of directional couplers (514, 524, 534), and comprising an end antenna (510) coupled to the first input of the first directional coupler (514) of said plurality of directional couplers (514, 524, 534);
the first directional coupler having an output configured to be coupled to a receiver unit (380);
a remainder of the directional couplers each having an output coupled to an input of a respective delay line of one or more delay lines (528, 538);
wherein an output of each delay line is coupled to a second input (519, 529) of a respective neighbouring directional coupler;
wherein each of the receive antennas receives a reflected radar pulse, wherein the reflected radar pulses, as received at the receive antennas, overlap in time, and wherein the delay lines delay the reflected radar pulses such that at the output of the first directional coupler they do not overlap in time.

2. The radar front-end as claimed in claim 1,
wherein the radar front-end is configured to couple a respective reflected radar pulse received at each of the receive antennas (510,520,530) sequentially to the receiver unit.

3. The radar front-end as claimed in claim 1 or 2, wherein the receive antennas are configured to receive a radar signal having a carrier frequency in a range of 10 GHz to 100GHz.

4. The radar front-end as claimed in any preceding claim, where the reflected radar pulse has a duration in a range between 10 µs and 1ms.

5. The radar front-end as claimed in any preceding claim, wherein each delay line introduces a delay between 10µs and 1 ms.

6. The radar front-end as claimed in any preceding claim, wherein the array of receive antennas is a linear array.

7. The radar front-end as claimed in any preceding claim, wherein the plurality of directional couplers is a plurality of rat-race couplers.

8. The radar front-end as claimed in claim 7, wherein the first input of each directional coupler is a respective rat-race first input, the second input of each directional coupler is a respective rat-race second input, and the output of each directional coupler is a respective rat-race sigma output.

9. The radar front-end as claimed in any preceding claim, wherein
the receive antennas of the array are equally spaced apart, and the delay lines are configured to provide equal propagation delays.

10. The radar front-end as claimed in claim 6, or any of claims 7 to 9 when depending from claim 6:
further comprising a transmit antenna, wherein the transmit antenna is aligned to the linear array of antennas to form an extended array.

11. The radar front-end as claimed in claim 10, wherein the transmit antenna is configured to transmit a radar chirp, each antenna of the array of receive antennas (510,520,530) is arranged to receive a respective reflection of the radar chirp from a target, and the delays lines are configured to couple the reflections to the receiver unit such that they are non-overlapping in time.

12. The radar front-end as claimed in any preceding claim, further comprising the receiver unit (380).

13. A method comprising:
transmitting a radar signal comprising a plurality of periodic pulses having a first duration from a transmit antenna (610);
receiving, at a first receive antenna (510) of an array of receive antennas (510,520,530), a reflection of a pulse transmitted from the transmit antenna as a first-antenna reflected pulse, the first receive antenna (510) coupled to a first directional coupler (514);
coupling, by means of the first directional coupler having an output configured to be coupled to a receiver unit (380), the first-antenna reflected pulse to the receiver unit (380);
receiving, at a second receive antenna (520) of the array of receive antennas, a reflection of the pulse transmitted from the transmit antenna as a second-antenna reflected pulse, wherein the first-antenna reflected pulse and the second-antenna reflected pulse are overlapping in time;
coupling, by means of a second directional coupler (524) coupled to the second receive antenna (520), the second antenna reflected pulse to a start of a delay line (528);
coupling the second antenna reflected pulse at an end of the delay line to the first directional coupler (514); and
coupling, by means of the first directional coupler (514), the second-antenna reflected pulse to the receiver unit (380) subsequent to the first-antenna reflected pulse, wherein the delay line (528) delays the second-antenna reflected pulse such that at the output of the first directional coupler the first-antenna reflected pulse and the second-antenna reflected pulse do not overlap in time.

## Patentansprüche

1. Radar-Frontend (500), das Folgendes umfasst:
ein Array von Empfangsantennen (510, 520, 530), wobei jede Antenne mit einem ersten Eingang eines jeweiligen einer Vielzahl von Richtkopplern (514, 524, 534) gekoppelt ist und eine Endantenne (510) umfasst, die mit dem ersten Eingang des ersten Richtkopplers (514) der Vielzahl von Richtkopplern (514, 524, 534) gekoppelt ist;
wobei der erste Richtkoppler einen Ausgang aufweist, der dazu ausgelegt ist, mit einer Empfängereinheit (380) gekoppelt zu werden;
einen Rest der Richtkoppler, die jeweils einen Ausgang aufweisen, der mit einem Eingang einer jeweiligen Verzögerungsleitung einer oder mehrerer Verzögerungsleitungen (528, 538) gekoppelt ist;
wobei ein Ausgang jeder Verzögerungsleitung mit einem zweiten Eingang (519, 529) eines jeweiligen benachbarten Richtkopplers gekoppelt ist;
wobei jede der Empfangsantennen einen reflektierten Radarimpuls empfängt, wobei sich die reflektierten Radarimpulse, wie an den Empfangsantennen empfangen, zeitlich überlappen, und wobei die Verzögerungsleitungen die reflektierten Radarimpulse verzögern, sodass sie sich an dem Ausgang des ersten Richtkopplers zeitlich nicht überlappen.

2. Radar-Frontend nach Anspruch 1,
wobei das Radar-Frontend dazu ausgelegt ist, einen jeweiligen reflektierten Radarimpuls, der an jeder der Empfangsantennen (510,520,530) empfangen wird, sequentiell mit der Empfängereinheit zu koppeln.

3. Radar-Frontend nach Anspruch 1 oder 2, wobei die Empfangsantennen dazu ausgelegt sind, ein Radarsignal mit einer Trägerfrequenz in einem Bereich von 10 GHz bis 100 GHz zu empfangen.

4. Radar-Frontend nach einem der vorhergehenden Ansprüche, wobei der reflektierte Radarimpuls eine Dauer in einem Bereich zwischen 10 µs und 1 ms aufweist.

5. Radar-Frontend nach einem der vorhergehenden Ansprüche, wobei jede Verzögerungsleitung eine Verzögerung zwischen 10 µs und 1 ms einführt.

6. Radar-Frontend nach einem der vorhergehenden Ansprüche, wobei das Array von Empfangsantennen ein lineares Array ist.

7. Radar-Frontend nach einem der vorhergehenden Ansprüche, wobei
die Vielzahl von Richtkopplern eine Vielzahl von Ringkopplern ist.

8. Radar-Frontend nach Anspruch 7, wobei
der erste Eingang jedes Richtkopplers ein jeweiliger erster Ringeingang ist, der zweite Eingang jedes Richtkopplers ein jeweiliger zweiter Ringeingang ist, und der Ausgang jedes Richtkopplers ein jeweiliger Sigma-Ringausgang ist.

9. Radar-Frontend nach einem der vorhergehenden Ansprüche, wobei
die Empfangsantennen des Arrays gleichmäßig beabstandet sind und die Verzögerungsleitungen dazu ausgelegt sind, gleiche Ausbreitungsverzögerungen bereitzustellen.

10. Radar-Frontend nach Anspruch 6 oder einem der Ansprüche 7 bis 9, wenn von Anspruch 6 abhängig:
das ferner eine Sendeantenne umfasst, wobei die Sendeantenne auf das lineare Array von Antennen ausgerichtet ist, um ein erweitertes Array zu bilden.

11. Radar-Frontend nach Anspruch 10,
wobei die Sendeantenne dazu ausgelegt ist, einen Radarchirp zu senden, jede Antenne des Arrays von Empfangsantennen (510,520,530) dazu ausgelegt ist, eine jeweilige Reflexion des Radarchirps von einem Ziel zu empfangen, und die Verzögerungsleitungen dazu ausgelegt sind, die Reflexionen mit der Empfängereinheit so zu koppeln, dass sie sich zeitlich nicht überlappen.

12. Radar-Frontend nach einem der vorhergehenden Ansprüche,
ferner umfassend die Empfängereinheit (380).

13. Verfahren, das Folgendes umfasst:
Senden eines Radarsignals, das eine Vielzahl von periodischen Impulse mit einer ersten Dauer von einer Sendeantenne (610) umfasst;
Empfangen, an einer ersten Empfangsantenne (510) eines Arrays von Empfangsantennen (510,520,530), einer Reflexion eines von der Sendeantenne übertragenen Impulses als einen reflektierten Impuls einer ersten Antenne, wobei die erste Empfangsantenne (510) mit einem ersten Richtkoppler (514) gekoppelt ist;
Koppeln, mittels des ersten Richtkopplers mit einem Ausgang, der dazu ausgelegt ist, mit einer Empfängereinheit (380) gekoppelt zu werden, des reflektierten Impulses der ersten Antenne mit der Empfängereinheit (380);
Empfangen, an einer zweiten Empfangsantenne (520) des Arrays von Empfangsantennen, einer Reflexion des von der Sendeantenne übertragenen Impulses als einen reflektierten Impuls einer zweiten Antenne, wobei sich der reflektierte Impuls der ersten Antenne und der reflektierte Impuls der zweiten Antenne zeitlich überlappen;
Koppeln, mittels eines zweiten Richtkopplers (524), der mit der zweiten Empfangsantenne (520) gekoppelt ist, des reflektierten Impulses der zweiten Antenne mit einem Start einer Verzögerungsleitung (528);
Koppeln des reflektierten Impulses der zweiten Antenne an einem Ende der Verzögerungsleitung mit dem ersten Richtkoppler (514); und
Koppeln, mittels des ersten Richtkopplers (514), des reflektierten Impulses der zweiten Antenne an die Empfängereinheit (380) im Anschluss an den reflektierten Impuls der ersten Antenne, wobei die Verzögerungsleitung (528) den reflektierten Impuls der zweiten Antenne verzögert, so dass sich am Ausgang des ersten Richtkopplers der reflektierte Impuls der ersten Antenne und der reflektierte Impuls der zweiten Antenne nicht zeitlich überlappen.

## Revendications

1. Frontal radar (500) comprenant :
un réseau d'antennes de réception (510, 520, 530), chaque antenne étant couplée à une première entrée de l'un respectif d'une pluralité de coupleurs directionnels (514, 524, 534), et comprenant une antenne d'extrémité (510) couplée à la première entrée du premier coupleur directionnel (514) de ladite pluralité de coupleurs directionnels (514, 524, 534) ;
le premier coupleur directionnel ayant une sortie configurée pour être couplée à une unité réceptrice (380) ;
le restant des coupleurs directionnels ayant chacun une sortie couplée à une entrée d'une ligne à retard respective d'une ou plusieurs lignes à retard (528, 538) ;
une sortie de chaque ligne à retard étant couplée à une deuxième entrée (519, 529) d'un coupleur directionnel voisin respectif ;
chacune des antennes de réception recevant une impulsion radar réfléchie, les impulsions radar réfléchies, telles que reçues au niveau des antennes de réception, se chevauchant dans le temps, et les lignes à retard retardant les impulsions radar réfléchies de telle sorte qu'elles en se chevauchent pas dans le temps à la sortie du premier coupleur directionnel.

2. Frontal radar selon la revendication 1,
lequel frontal radar est configuré pour coupler de manière séquentielle à l'unité réceptrice une impulsion radar réfléchie respective reçue à chacune des antennes de réception (510, 520, 530).

3. Frontal radar selon la revendication 1 ou 2, dans lequel les antennes de réception sont configurées pour recevoir un signal radar ayant une fréquence porteuse dans une plage de 10 GHz à 100 GHz.

4. Frontal radar selon l'une quelconque des revendications précédentes, dans lequel l'impulsion radar réfléchie a une durée comprise dans une plage de 10 µs à 1 ms.

5. Frontal radar selon l'une quelconque des revendications précédentes, dans lequel chaque ligne à retard introduit un retard compris entre 10 µs et 1 ms.

6. Frontal radar selon l'une quelconque des revendications précédentes, dans lequel le réseau d'antennes de réception est un réseau linéaire.

7. Frontal radar selon l'une quelconque des revendications précédentes, dans lequel
la pluralité de coupleurs directionnels est une pluralité de coupleurs en anneau.

8. Frontal radar selon la revendication 7, dans lequel la première entrée de chaque coupleur directionnel est une première entrée en anneau respective, la deuxième entrée de chaque coupleur directionnel étant une deuxième entrée en anneau respective, et la sortie de chaque coupleur directionnel est une sortie en anneau sigma respective.

9. Frontal radar selon l'une quelconque des revendications précédentes, dans lequel
les antennes de réception du réseau sont espacées de manière égale, et les lignes à retard sont configurées pour fournir des retards de propagation égaux.

10. Frontal radar selon la revendication 6, ou l'une quelconque des revendications 7 à 9, lorsqu'elles dépendent de la revendication 6 :
comprenant en outre une antenne d'émission, laquelle antenne d'émission étant alignée avec le réseau linéaire d'antennes pour former un réseau étendu.

11. Frontal radar selon la revendication 10,
dans lequel l'antenne d'émission est configurée pour émettre un signal radar modulé en fréquence, chaque antenne du réseau d'antennes de réception (510, 520, 530) étant agencée de manière à recevoir une réflexion respective du signal radar modulé en fréquence depuis une cible, et les lignes à retard étant configurées pour coupler les réflexions à l'unité réceptrice de telle sorte qu'elles ne se chevauchent pas dans le temps.

12. Frontal radar selon l'une quelconque des revendications précédentes,
comprenant en outre l'unité réceptrice (380).

13. Procédé comprenant :
l'émission, par une antenne d'émission (610), d'un signal radar comprenant une pluralité d'impulsions périodiques ayant une première durée ;
la réception, au niveau d'une première antenne de réception (510) d'un réseau d'antennes de réception (510, 520, 530), d'une réflexion d'une impulsions transmise par l'antenne de transmission en tant qu'impulsion réfléchie de première antenne, la première antenne de réception (510) étant couplée à un premier coupleur directionnel (514) ;
le couplage, au moyen du premier coupleur directionnel ayant une sortie configurée pour être couplée à une unité réceptrice (380), de l'impulsion réfléchie de première antenne à l'unité réceptrice (380) ;
la réception, au niveau d'une deuxième antenne de réception (520) du réseau d'antennes de réception, d'une réflexion de l'impulsion transmise par l'antenne de transmission en tant qu'impulsion réfléchie de deuxième antenne, l'impulsion réfléchie de première antenne et l'impulsion réfléchie de deuxième antenne se chevauchant dans le temps ;
le couplage, au moyen d'un deuxième coupleur directionnel (524) couplé à la deuxième antenne de réception (520), de l'impulsion réfléchie de deuxième antenne à un départ d'une ligne à retard (528) ;
le couplage de l'impulsion réfléchie de deuxième antenne à une extrémité de la ligne à retard au premier coupleur directionnel (514) ; et
le couplage, au moyen du premier coupleur directionnel (514), de l'impulsion réfléchie de deuxième antenne à l'unité réceptrice (380) à la suite de l'impulsion réfléchie de première antenne, la ligne à retard (528) retardant l'impulsion réfléchie de deuxième antenne de telle sorte qu'à la sortie du premier coupleur directionnel l'impulsion réfléchie de première antenne et l'impulsion réfléchie de deuxième antenne ne se chevauchent pas dans le temps.
